# EUROPÄISCHE PATENTSCHRIFT

(11) **EP 2 576 266 B1**
(45) Veröffentlichungstag und Bekanntmachung des Hinweises auf die Patenterteilung: **15.01.2014**
(21) Anmeldenummer: 11735778.0
(22) Anmeldetag: 25.05.2011
(51) Int. Cl.: B60K 17/356, B60K 23/08

(54) **HYDROSTATISCHER FAHRANTRIEB**
HYDROSTATIC DRIVE SYSTEM
ORGANE DE TRANSLATION HYDROSTATIQUE

(30) Priorität: 26.05.2010 DE 102010021624
(43) Veröffentlichungstag der Anmeldung: 10.04.2013
(73) Patentinhaber: Robert Bosch GmbH, 70442 Stuttgart (DE)
(72) Erfinder: BRAND, Michael, 89075 Ulm (DE)
(74) Vertreter: Thürer, Andreas
(86) Internationale Anmeldenummer: PCT/EP2011/002579
(87) Internationale Veröffentlichungsnummer: WO 2011/147562

(56) Entgegenhaltungen:
- EP-A1- 0 224 144
- EP-A1- 1 950 468
- EP-A2- 1 580 058
- EP-A2- 1 582 389
- WO-A1-92/10382
- DE-A1- 4 211 323
- DE-A1-102005 060 340
- DE-A1-102007 018 449
- FR-A1- 2 251 453

## Beschreibung

Die Erfindung betrifft einen hydrostatischen Fahrantrieb gemäß dem Oberbegriff des Patentanspruchs 1 und ein Verfahren zur Antischlupfregelung eines hydrostatischen Fahrantriebes gemäß dem Oberbegriff des Patentanspruchs 9.

Hydrostatische Fahrantriebe finden insbesondere in Bereichen Verwendung, in denen schwere Fahrzeuge mit hoher Präzision auf schwierigem Untergrund bewegt werden müssen. Prinzipiell wird dabei eine Antriebsleistung eines überwiegend mit konstanter Drehzahl arbeitenden Dieselmotors über ein verstellbares hydraulisches Getriebe an Achseinheiten oder direkt an einzelne Räder der Achseinheiten übertragen. Anwendung finden solche Fahrantriebe insbesondere in Landmaschinen oder in Baumaschinen. Aufgrund der oft ungünstigen Untergrundverhältnisse in diesen Anwendungsgebieten ist eine wichtige Aufgabe des Fahrantriebes, die Räder mit einer optimalen Traktion bzw. einem minimalen Schlupf anzutreiben.

Oftmals sind bei solchen Fahrantrieben nur die Räder einer ersten Achseinheit, insbesondere der Vorderachseinheit, angetrieben. Die Räder einer anderen Achseinheit, beispielsweise der Hinterachseinheit, laufen unangetrieben mit und sind häufig lenkbar. Der Antrieb der Achseinheiten oder der einzelnen Räder erfolgt über verstellbare oder unverstellbare bzw. konstante Hydromotoren. Die Hydromotoren werden über zumindest eine Hydropumpe, die zumeist vom Motor des Fahrantriebes angetrieben ist, mit Druckmittel versorgt.

Ein aus dem Stand der Technik bekannter Ansatz, die Traktion des Fahrantriebes zu maximieren, ist prinzipiell der Einsatz eines Vierrad- oder Allradantriebes. Zudem offenbart der Stand der Technik zur Minimierung des Schlupfes Verfahren zur Antischlupfregelung (ASR).

Die gattungsgemäße DE 10 2005 060 340 A1 zeigt einen hydrostatischen Fahrantrieb, der in permanentem Vierradantrieb betrieben ist. Des Weiteren ist ein Verfahren gezeigt, das ein Blockieren der Räder im Bremsbetrieb minimiert (ABS). Nachteilig ist, dass kein Umschalten vom Vierrad- zum Zweiradantrieb und keine Antischlupfregelung (ASR) im Fahrbetrieb vorgesehen sind.

Die DE 42 11 323 zeigt einen hydrostatischen Fahrantrieb und ein Verfahren zur automatischen Umschaltung von Vierrad- auf Zweiradantrieb. Die Umschaltung erfolgt dabei in Abhängigkeit der Fahrgeschwindigkeit. Nachteilig daran ist, dass keine Antischlupfregelung (ASR) im Fahrbetrieb vorgesehen ist.

Die DE 10 2007 018 449 A1 zeigt einen permanenten hydrostatischen Vierradantrieb mit ASR. Nachteilig an der vorgeschlagenen Lösung ist, dass kein Umschalten zwischen einem Vierrad- und einem Zweiradantrieb vorgesehen ist. Tritt Schlupf bei einem Rad auf, reduziert eine Steuereinrichtung sowohl ein Schluckvolumen des zugehörigen Hydromotors als auch ein Schluckvolumen der anderen Hydromotoren. Nachteilig hieran ist, dass dadurch das Gesamtantriebsmoment verringert wird und ggf. ein Stillstand des Fahrzeugs und ein erschwertes Losbrechen nach dem Stillstand droht.

Die EP 1582 389 B1 zeigt einen hydrostatischen Fahrantrieb eines Arbeitsfahrzeuges mit ASR, bei dem manuell zwischen Allradantrieb und Zweiradantrieb umgeschaltet werden kann. Nachteilig hieran ist, dass ein Umschalten nur bedarfsgerecht erfolgt, wenn die Fahrbedingungen lückenlos und entsprechend aufwändig durch eine erfahrene Bedienperson überwacht werden. In der Konsequenz ist es wahrscheinlich, dass die Bedienperson den Vierradantrieb, der im Vergleich zum Zweiradantrieb einen geringeren Wirkungsgrad hat, permanent eingeschaltet lässt. Im ASR-Fall reduziert eine Steuereinrichtung zuerst ein Schluckvolumen eines das betroffene Rad oder die betroffene Achseinheit antreibenden Hydromotors bevor zum Ausgleich der Volumenstrombilanz und zum Erhalt des Gesamtantriebsmomentes das Schluckvolumen der den nicht schlupfenden Rädern zugeordneten Hydromotoren entsprechend erhöht wird. Nachteilig hieran ist, dass durch die erste Reaktion das Gesamtantriebsmoment zuerst verringert wird, womit ggf. ein Stillstand des Fahrzeugs und ein erschwertes Losbrechen nach dem Stillstand verbunden ist.

Die DE 43 96 170 B4 zeigt einen Vierradantrieb für einen Kipplastwagen mit einer mechanisch und einer hydraulisch angetriebenen Achseinheit. Der Antrieb erfolgt zunächst über die mechanisch angetriebene Achseinheit. Beim Auftreten von Schlupf an Rädern der mechanischen Achseinheit wird die hydraulisch angetriebene Achseinheit zugeschaltet. Nachteilig an dieser Lösung ist, dass zwei unterschiedliche Antriebkonzepte aufeinander abgestimmt betrieben werden müssen, was einen erhöhten vorrichtungstechnischen Aufwand darstellt.

Nachteilig an den gezeigten Fahrantrieben und den gezeigten Verfahren ist, dass bei auftretendem Schlupf zunächst ein Gesamtantriebsmoment des Fahrantriebes reduziert wird.

Demgegenüber liegt der Erfindung die Aufgabe zugrunde, einen hydrostatischen Fahrantrieb mit verbesserter Traktion bei auftretendem Schlupf und einem verbessertem Wirkungsgrad zu schaffen.

Diese Aufgabe wird gelöst durch einen hydrostatischen Fahrantrieb mit den Merkmalen des Patentanspruchs 1 und durch ein Verfahren zur Antischlupfregelung eines hydrostatischen Fahrantriebes mit den Merkmalen des Patentanspruchs 9.

Vorteilhafte Weiterbildungen der Erfindung sind Gegenstand der Unteransprüche.

Erfindungsgemäß hat der hydrostatische Fahrantrieb zumindest eine Hydropumpe, über die zumindest zwei Hydromotoren mit Druckmittel versorgt sind. Über die Hydromotoren können jeweils eine Achseinheit oder ein Rad der Achseinheit angetrieben sein. Eine Einrichtung erfasst an einer ersten Achseinheit einen Schlupf eines Rades der Achseinheit. Zumindest ein Hydromotor der anderen Achseinheit oder eines Rades der anderen Achseinheit ist in Abhängigkeit des Schlupfes von einer Steuereinrichtung automatisch zuschaltbar. Eine erfindungsgemäße Zuschaltung des zumindest einen Hydromotors der anderen Achseinheit oder des Rades der anderen Achseinheit führt zu mehr Traktion bzw. zu einem zusätzlichen Antriebsmoment bisher nicht angetriebener Räder und verhindert so trotz des Schlupfes ein Absinken des Gesamtantriebsmomentes, was einer Verlangsamung oder einem Festsetzen des Fahrzeugs vorbeugt. Zudem kann der Schlupf bereits aufgrund der Zuschaltung und ohne einen Eingriff am schlupfenden Rad beseitigt sein. Weiterhin kann diese Zuschaltung ein automatisches Umschalten zwischen einem Zweirad- und einem Mehrradantrieb, beispielsweise einem Vierradantrieb darstellen, was einen fehlerbehafteten willkürlichen Eingriff einer Bedienperson verhindert, sodass die Vortriebskraft und evtl. die Betriebssicherheit des Fahrzeugs verbessert ist. Weiterhin führt das zu einem vermehrten Einsatz des Zweiradantriebes und damit zu einem wirkungsgradoptimierten Einsatz des Fahrantriebes.

Um das Antriebsmoment des zumindest einen zugeschalteten Hydromotors der anderen Achseinheit oder des Rades der anderen Achseinheit über die Steuereinrichtung gut steuern zu können, ist der Hydromotor in einer vorteilhaften Weiterbildung ein Verstellmotor. Dieser ist bei Erfassung des Schlupfes an der ersten Achseinheit oder am Rad der ersten Achseinheit über die Steuereinrichtung in Richtung größeren Schluckvolumens verstellbar, was neben der oben gezeigten Zuschaltung eine dosierte Zusteuerung des Antriebsmomentes des Hydromotors ermöglicht.

In einer vorrichtungstechnisch einfachen Weiterbildung des erfindungsgemäßen Fahrantriebes ist der zumindest eine Hydromotor der anderen Achseinheit oder des Rades der anderen Achseinheit in einer Fahrsituation, in der an der ersten Achseinheit oder am Rad der ersten Achseinheit kein Schlupf auftritt, über die Steuereinrichtung abgeschaltet. Dadurch ist der Zweiradantrieb, der einen höheren Wirkungsgrad als der Vierradantrieb hat, aktiviert.

In einer vorteilhaften Weiterbildung des erfindungsgemäßen Fahrantriebes ist der zumindest eine Hydromotor der anderen Achseinheit oder des Rades der anderen Achseinheit ein Verstellmotor und ist somit in einer Fahrsituation, in der an der ersten Achseinheit kein Schlupf auftritt, über die Steuereinrichtung in Richtung kleineren Schluckvolumens bzw. Antriebsmomentes verstellbar. Somit ist in Abhängigkeit von den Traktions- bzw. Bodenverhältnissen ein stabiles Gleichgewicht mit optimaler Verteilung von Traktion und Radantriebsmomenten zwischen den jeweiligen Achseinheiten bzw. Rädern der Achseinheiten einstellbar.

Zur Erfassung des Schlupfes hat die Einrichtung zumindest einen Drucksensor, der in oder an einer Hochdruckleitung des Fahrantriebes angeordnet ist. Ergänzend dazu ist es von Vorteil, wenn die Einrichtung zumindest einen Drehzahlmesser hat, über den eine Drehzahl einer Achseinheit, eines Rades oder eines Hydromotors bestimmbar ist.

In einer bevorzugten Weiterbildung ist der zumindest eine Hydromotor der ersten Achseinheit oder des Rades der ersten Achseinheit ein Verstellmotor und ist über die Steuereinrichtung verstellbar. Dies hat den Vorteil, dass für einen Fall, in dem die Zuschaltung oder Zusteuerung des zumindest einen Hydromotors der anderen Achseinheit oder des Rades der anderen Achseinheit nicht zur Beseitigung des Schlupfes am Rad der ersten Achseinheit geführt hat, über eine Verstellung des Hydromotors der ersten Achseinheit oder des Rades der ersten Achseinheit in Richtung kleineren Schluckvolumens dessen Antriebsmoment verringert werden kann und so die Schlupfsituation beendbar ist. Im Gegensatz zu unterschiedlichen Schwenkdynamiken bei der aus dem Stand der Technik bekannten reinen Pumpenkompensation ist dabei eine Dynamik der Motorverstellung bei den Hydromotoren gleich und es ergibt sich kein potentieller dynamischer Überschuss oder eine potentielle dynamische Unterdeckung an Öl.

Um in einem Fall, in dem weder die Zuschaltung oder Zusteuerung des zumindest einen Hydromotors der anderen Achseinheit oder des Rades der anderen Achseinheit, noch die Verstellung des Hydromotors der ersten Achseinheit oder des Rades der ersten Achseinheit in Richtung kleineren Schluckvolumens zur Beseitigung des Schlupfes geführt haben, ist die zumindest eine Hydropumpe des Fahrantriebes vorteilhafter Weise eine Verstellpumpe und ist über die Steuereinrichtung in Richtung eines kleineren Fördervolumens verstellbar.

Zur Erhöhung der Betriebssicherheit und um es der Bedienperson auch im Falle eines Ausfalls der Steuereinrichtung zu ermöglichen, z.B. zwischen Zweirad- und Vierradantrieb zu wechseln, ist die über die Steuereinrichtung gesteuerte automatische Zuschaltung oder Verstellung des zumindest einen Hydromotors der anderen Achseinheit oder des Rades der anderen Achseinheit über eine Bedieneinheit manuell aktivierbar bzw. deaktivierbar.

Erfindungsgemäß weist ein Verfahren zur Antischlupfregelung eines hydrostatischen Fahrantriebes, der zumindest eine Hydropumpe hat, über die zumindest zwei parallel geschaltete Hydromotoren mit einem Druckmittel versorgbar sind, wobei eine erste Achseinheit oder ein Rad der ersten Achseinheit über einen Hydromotor der ersten Achseinheit oder des Rades der ersten Achseinheit angetrieben ist, und wobei eine andere Achseinheit oder ein Rad der anderen Achseinheit über einen Hydromotor der anderen Achseinheit oder des Rades der anderen Achseinheit antreibbar ist, einen Schritt "Zuschaltung des zumindest einen Hydromotors der anderen Achseinheit oder des Rades der anderen Achseinheit über eine Steuereinrichtung in Abhängigkeit eines Schlupfes" auf, nachdem ein Schlupf an einem Rad der ersten Achseinheit erfasst wurde. Das erfindungsgemäße Zuschalten des Hydromotors führt sofort zu mehr Traktion bzw. zu einem zusätzlichen Antriebsmoment bisher nicht angetriebener Räder und verhindert so trotz des Schlupfes ein Absinken des Gesamtantriebsmomentes, was einer Verlangsamung oder einem Festsetzen des Fahrzeugs vorbeugt. Zudem kann der Schlupf bei konstantem Antriebsmoment durch Reduzierung des Druckes an der Hydropumpe bereits aufgrund der Zuschaltung und ohne einen Eingriff an der ersten Achseinheit oder an einem Rad der ersten Achseinheit beseitigt werden. Weiterhin erfolgt die Zuschaltung über die Steuereinrichtung automatisiert, was einen fehlerbehafteten willkürlichen Eingriff einer Bedienperson verhindert, sodass die Betriebssicherheit des Fahrzeugs verbessert ist. Ein Sonderfall der erfindungsgemäßen Zuschaltung ist die Zuschaltung einer zweiten Achseinheit zur bereits angetriebenen ersten Achseinheit eines Vierradantriebes. Weiterhin führt das Zuschalten zu einem vermehrten Einsatz eines Zweiradantriebes und damit zu einem wirkungsgradoptimierten Einsatz des Fahrantriebes.

Die Erfassung einer Schlupfsituation erfolgt bevorzugter Weise über eine Bestimmung eines Druckes in einer Hochdruckleitung des Fahrantriebes mittels eines Drucksensors. Alternativ oder ergänzend dazu kann eine Bestimmung einer Drehzahl der Hydromotoren oder der Achseinheiten oder der Räder mittels eines Drehzahlmessers erfolgen. Erfasste Werte des Druckes und der Drehzahl werden an die Steuereinrichtung übermittelt und von ihr zur Ermittlung einer Schlupfsituation ausgewertet. Charakteristisch für eine Schlupfsituation ist dabei, dass der Druck relativ stark schwingt. Zudem liegt das notwendiger Weise gemittelte Druckniveau der Druckschwingungen niedriger als vor der Schlupfsituation. Das Druckniveau vor dem Schlupf ist ein Maß für die vor dem Schlupf erforderliche Traktion des Fahrantriebes, das über einen geeigneten Zeitraum gemittelte Druckniveau zu Beginn des Schlupfes, ist ein Maß für die Resttraktion des zumindest einen schlupfenden Rades. Welches Rad schlupft, kann von der Steuereinrichtung einfach aus den Daten der Drehzahlmesser ermittelten werden. Als Geber einer Drehzahlreferenz nicht schlupfender Räder eignen sich nicht angetriebene Räder.

Besonders vorteilhaft ist, das in der aufgetretenen Schlupfsituation gemessene Druckniveau zu einer Vorsteuerung der Hydromotoren zu nutzen. Ist die Druckdifferenz zwischen dem Druckniveau vor der Schlupfsituation und dem gemittelten Druckniveau zu Beginn des Schlupfes zu groß, kann das Antriebsmoment des schlupfenden Rades für folgende Fahrsituationen bereits präventiv reduziert werden.

Ist die Schlupfsituation trotz der Zuschaltung des zumindest einen Hydromotors der anderen Achseinheit oder des Rades der anderen Achseinheit nicht beendet, ist es von Vorteil, wenn über die Steuereinrichtung eine Erhöhung eines Schluckvolumens, beispielsweise durch Erhöhung eines Schwenkwinkels, des zumindest einen zugeschalteten Hydromotors in Abhängigkeit des Schlupfes erfolgt. Voraussetzung hierfür ist, dass der Hydromotor als Verstellmotor ausgebildet ist. Über die Erhöhung des Schluckvolumens steigt das Gesamtantriebsmoment des Fahrantriebes vorteilhafter Weise weiter an. Unter der Voraussetzung eines konstanten Fördervolumens der Hydropumpe sinkt das Antriebsmoment am schlupfenden Rad, was zur Beendigung der Schlupfsituation führen kann.

Insbesondere wenn die Schlupfsituation trotz erfindungsgemäßer Zuschaltung weiterhin besteht, kann ergänzend zu einem der vorherigen Schritte über die Steuereinrichtung, wenn der Hydromotor der ersten Achseinheit oder des Rades der ersten Achseinheit verstellbar ist, eine Verringerung seines Schluckvolumens erfolgen. Ebenso kann über die Steuereinrichtung, unter der Voraussetzung, dass die Hydropumpe verstellbar ist, eine Verringerung ihres Fördervolumens erfolgen, um die Schlupfsituation zu beenden.

Liegt kein Schlupf an einem Rad der ersten Achseinheit vor, kann über die Steuereinrichtung eine Abschaltung des zumindest einen Hydromotors der anderen Achseinheit oder des Rades der anderen Achseinheit, oder eine Verringerung des Schluckvolumens dieses Hydromotors erfolgen, um so entweder vom Mehrradantrieb zum Zweiradantrieb umzuschalten oder um eine optimale Verteilung der Antriebsmomente bzw. der Traktion zwischen den Achseinheiten zu erreichen und den Wirkungsgrad des Mehrradantriebes zu optimieren.

Im Folgenden wird ein einziges Ausführungsbeispiel der Erfindung anhand einer schematischen Zeichnung näher erläutert.

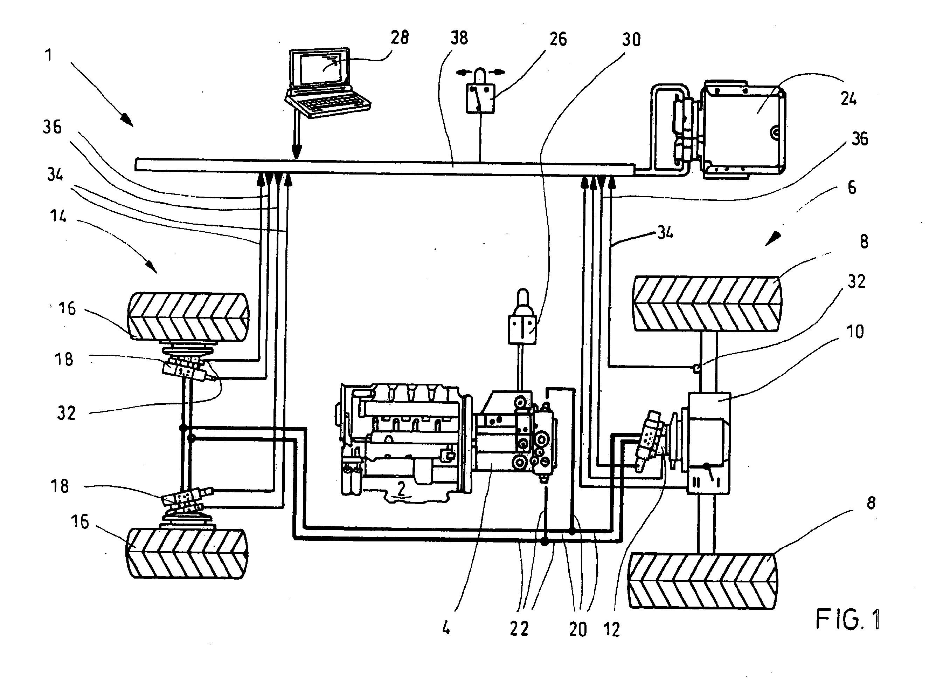

Figur 1 zeigt in einer schematischen Darstellung ein erstes und einziges Ausführungsbeispiel eines erfindungsgemäßen hydrostatischen Fahrantriebes 1 einer Erntemaschine. Ein Dieselmotor 2 ist mit einer verstellbaren Hydropumpe, die als Axialkolbenpumpe 4 in Schrägscheibenbauweise ausgebildet ist, gekoppelt und treibt diese an. Die Axialkolbenpumpe 4 ist zur Änderung einer Förderichtung und damit Fahrtrichtung durchschwenkbar. Eine erste Achseinheit, in diesem Fall die Vorderachseinheit 6 des Fahrantriebes 1, weist zwei Vorderräder 8 auf. Die Vorderräder 8 sind über ein Differenzialgetriebe 10 mit einem verstellbaren Hydromotor, der als Axialkolbenmotor 12 in Schrägscheibenbauweise ausgebildet ist, gekoppelt und von diesem angetrieben. Eine andere Achseinheit, in diesem Fall die Hinterachseinheit 14, weist zwei Hinterräder 16 auf. Im Falle der Hinterachseinheit 14 sind die beiden Hinterräder 16 jeweils direkt über einen zugeordneten verstellbaren Hydromotor, der als Axialkolbenmotor 18 in Schrägscheibenbauweise ausgebildet ist, angetrieben.

Die Axialkolbenpumpe 4 ist über eine Hochdruckleitung 20 und eine Niederdruckleitung 22 in einem geschlossenen hydraulischen Kreislauf an die drei parallel geschalteten Axialkolbenmotoren 12, 18 angeschlossen.

Der Fahrantrieb 1 hat eine Steuereinrichtung 24 zum automatischen Umschalten zwischen Zweirad- und Vierradantrieb und zur Steuerung der Zustände des Vierradantriebes. Weiterhin hat er eine manuelle Bedieneinheit 26 zur Aktivierung / Deaktivierung des erfindungsgemäßen automatischen Umschaltens und Steuerns und eine Diagnoseeinheit 28. Eine weitere manuelle Bedieneinheit 30 zum Fahrtrichtungswechsel ist mit der Axialkolbenpumpe 4 verbunden. Drehzahlmesser 32 sind über Signalleitungen 34 mit der Steuereinrichtung 24 verbunden. Über Signalleitungen 36 ist die Steuereinrichtung 24 mit Stellmotoren der Schrägscheibe der Axialkolbenmotoren 12, 18 verbunden. Ein Kabelbaum 38 der Steuereinrichtung 24 bündelt die Signalleitungen 34, 36.

In einem normalen und leichten Fahrbetrieb ist der Zweiradantrieb aktiv. Es ist nur die Vorderachseinheit 6 angetrieben. Der Dieselmotor 2 läuft dabei mit konstanter Drehzahl, sodass die von ihm angetriebene Axialkolbenpumpe 4 mit konstanter Drehzahl mitdreht und einen konstanten Druckmittelstrom in die Hochdruckleitung 20 fördert. So treibt sie den Axialkolbenmotor 12 der Vorderachseinheit 6 an. Sein Schluckvolumen ist dabei durch einen Schwenkwinkel an seiner Schrägscheibe eingestellt und resultiert in einem Antriebsmoment an der Vorderachseinheit 6. Über einen Zweig der Hochdruckleitung 20 strömt Druckmittel zu den Axialkolbenmotoren 18 der Hinterachseinheit 14. Ihr Schwenkwinkel ist gleich null, sodass die Hinterräder 16 während der Fahrbewegung passiv mitrollen. Dieser Zustand oder ein Zustand, bei dem die Schwenkwinkel der Axialkolbenmotoren 18 der Hinterachseinheit 14 so klein eingestellt sind, dass die Räder 16 und die Axialkolbenmotoren 18 etwa ihre Eigenhemmung überwinden, ist als Zweiradantrieb bezeichnet. Da die hinteren Räder 16 somit kein oder fast kein Antriebsmoment aufweisen, können sie nicht durchdrehen oder schlupfen. Sie eignen sich daher sehr gut zur Lenkung der Erntemaschine und zur Erfassung der Fahrgeschwindigkeit.

Wenn die Gesamttraktion bei schweren Arbeitsbedingungen nicht mehr ausreicht drehen die angetriebenen Vorderräder 8 durch. Zu diesem oder einem früheren Zeitpunkt hat die Bedienperson zwei Möglichkeiten: Entweder sie schaltet über eine (nicht gezeigte) Bedieneinheit manuell vom Zweiradantrieb in den Vierradantrieb um, oder sie aktiviert über die Bedieneinheit 26 bevorzugter Weise eine erfindungsgemäße automatisiert gesteuerte Umschaltung zwischen Zweirad- und Vierradantrieb.

Die Ausgangssituation zur Beschreibung des erfindungsgemäßen automatisierten Umschaltens zwischen Zwei- und Vierradantrieb und der Reaktion auf den ASR-Fall ist eine Fahrt im Zweiradbetrieb und eine über die Bedieneinheit 26 aktivierte automatisierte Umschaltung.

Erfindungsgemäß wird der Druck bzw. das Druckniveau in der Hochdruckleitung 20 des Fahrantriebes 1 permanent über einen nicht gezeigten Drucksensor erfasst und über eine (nicht gezeigte) Signalleitung an die Steuereinrichtung 24 übermittelt. Diese ermittelt bzw. errechnet das Druckniveau und das gemittelte Druckniveau vor einer Schlupfsituation.

Tritt nun eine Schlupfsituationen an den Rädern 8 der angetriebenen Vorderachseinheit 6 auf, ist dies an starken Schwingungen des Druckes zu erkennen, wobei das gemittelte Druckniveau der Schwingungen niedriger ist als vor dem Schlupf, also vor Auftreten der Schwingungen. Das Druckniveau vor dem Schlupf ist dabei ein Maß für die bis kurz vor dem Schlupf erforderliche Traktion des Fahrantriebes 1. Das gemittelte Druckniveau nach Auftreten des Schlupfes, also ein über einen geeigneten Zeitraum gemittelter Wert des schwingenden Druckes, ist ein Maß für die Resttraktion des zumindest einen schlupfenden Rades 8, da der Druck immer vom Rad 8 mit der geringsten Traktion bestimmt ist. Welches Rad 8 durchdreht, kann von der Steuereinrichtung 24 einfach aus einer über einen Drehzahlmesser 32 ermittelten abweichenden Drehzahl eines Rades 8 bestimmt werden. Da die Hinterräder 16 in diesem Fall nicht angetrieben sind und folglich nicht schlupfen, kann ihre Drehzahl gut als Referenzdrehzahl nicht schlupfender Räder dienen. Diese Ermittlungsstrategie ist gegenüber einer Strategie, bei der eine Referenzdrehzahl über eine Mittelung der Drehzahlen aller Räder 8, 16 erfolgt genauer, da keine bereits schlupfenden Räder in die Ermittlung miteinbezogen werden. Natürlich wird dabei von der Steuereinrichtung ein Radumfang aller beteiligten Räder 8, 16 berücksichtigt.

Die Druckdifferenz zwischen dem Druckniveau vor dem Schlupf und dem gemittelten Druckniveau nach Eintreten des Schlupfes ist demnach auch ein Maß für die verbleibende Traktion und eine wichtige Eingansgröße der Steuereinrichtung, um auf den ASR-Fall zu reagieren.

Der erste erfindungsgemäße Schritt der Steuereinrichtung 24 als Reaktion auf die Schlupfsituation ist, das Antriebsmoment an den bisher nicht angetriebenen Hinterrädern 16 der Hinterachseinheit 14 zu erhöhen, was einem automatisierten Zuschalten der Räder 16 bzw. einem automatisierten Umschalten vom Zweiradantrieb in den Vierradantrieb entspricht. Gleichzeitig bedeutet das, dass das Schluckvolumen der Axialkolbenmotoren 18 sprunghaft erhöht ist. Prinzipiell kann in diesem Fall über die Steuereinrichtung 24 eine Kompensation des Förderstromes der Axialkolbenpumpe 4 erfolgen. Erfolgt die Kompensation nicht, steht in Summe mehr Schluckvolumen in den Hydromotoren 12, 18 zur Verfügung und der Druck in der Hochdruckleitung 20 sinkt bei weiterhin konstantem Förderstrom der Axialkolbenpumpe 4 ab. Da das Antriebsmoment eines Axialkolbenmotors 12 von der Druckdifferenz zwischen seinem Zulauf 20 und Ablauf 22 abhängt, ist dadurch auch das Antriebsmoment des schlupfenden Rades 8 verringert. Unterschreitet das Antriebsmoment des Rades 8 durch diese Maßnahme einen den Boden- bzw. Reibverhältnissen entsprechenden kritischen Wert, ist dadurch der Schlupf am Rad 8 beseitigt und die Traktion des Rades 8 wieder hergestellt. Alleine durch die Zuschaltung der Hinterräder 16, ist es also möglich, dass die Schlupfsituation an der Vorderachseinheit 6 beseitigt werden kann.

Dieser erste Schritt bei auftretendem Schlupf stellt im Prinzip eine Umkehrung der bekannten ASR-Strategien des Standes der Technik dar, die auf die Schlupfsituation zuallererst mit einer Verringerung des Antriebsmomentes bzw. des Schluckvolumens des das schlupfende Rad 8 antreibenden Hydromotors reagieren und damit das Gesamtantriebsmoment des Fahrzeugs zunächst verringern. Diese bekannten ASR-Strategien erhöhen ein Risiko, dass das Fahrzeug zum Stehen kommt und die Traktion zum Losbrechen bei ohnehin schwierigen Bodenverhältnissen nicht mehr ausreicht. Eine erfindungsgemäße Erhöhung des Antriebsmomentes der angetriebenen Räder 8 ist nur dann möglich, wenn dieser Freiheitsgrad auch wirklich gegeben ist und nicht bereits alle Schluckvolumina auf maximale Werte eingestellt sind, was im Stand der Technik bei voreingestelltem Vierradantrieb in der Regel der Fall ist. Hier wird der Vorteil besonders deutlich, den die erfindungsgemäße automatische Umschaltung vom Zweiradantrieb zum Vierradantrieb darstellt. In einem anderen Anwendungsbeispiel ist eine herkömmliche Verringerung des Schluckvolumens des antreibenden Hydromotors gar nicht möglich, da der Motor ein Konstantmotor ist. Dies betrifft beispielsweise im Zweiradantrieb betriebene Erntemaschinen, bei denen eine angetriebene Achseinheit von einem Konstantmotor angetrieben ist. Hier bietet die erfindungsgemäße ASR-Strategie der Zuschaltung einen ersten Schritt zur Beseitigung der Schlupfsituation an der angetriebenen Achseinheit.

Besteht die Schlupfsituation trotz der gezeigten Zuschaltung weiterhin, was am oben beschriebenen Druckverlauf und den Drehzahlverhältnissen von der Steuereinrichtung 24 weiterhin erkannt wird, können die Schluckvolumina bzw. die Schwenkwinkel der Axialkolbenmotoren 18 der Räder 16 der Hinterachseinheit 14 weiter vergrößert werden. Alle Veränderungen der Schluckvolumina der genannten Axialkolbenmotoren 12, 18 geschehen bevorzugter Weise unter Berücksichtigung einer Vorgabe, dass das Gesamtantriebsmoment des Fahrantriebes 1, bzw. die Geschwindigkeit des Fahrzeugs, konstant gehalten werden kann. Setzt man einen konstanten Förderstrom der Axialkolbenpumpe 4 voraus, bedeutet das, dass bei einer gezeigten Erhöhung der Schluckvolumina der Axialkolbenmotoren 18 der Räder 16 der Hinterachseinheit 14 das Schluckvolumen des Axialkolbenmotors 12 der Vorderachseinheit 6 über die Steuereinrichtung 24 entsprechend verringert werden muss. Alternativ dazu kann die Erhöhung der Schluckvolumina der Axialkolbenmotoren 18 über die Steuereinrichtung 24 auch zu einer Erhöhung des Gesamtantriebsmomentes genutzt werden und ein damit verbundener erhöhter Volumenstrombedarf durch die Axialkolbenpumpe 4 kompensiert werden.

Ist die Schlupfsituation über die oben gezeigten Schritte der automatisierten Zuschaltung der Hinterräder 16 und der zusätzlichen Erhöhung des Schluckvolumens der sie antreibenden Axialkolbenmotoren 18 nicht beseitigt worden, kann auf herkömmliche Art über die Verringerung des Antriebsmomentes des Axialkolbenmotors 12 reagiert werden, indem dessen Schluckvolumen gesenkt wird. Dieser Vorgang kann vorteilhafter Weise gleichzeitig mit der Erhöhung der Schluckvolumina der Axialkolbenmotoren 18 erfolgen. Analog dazu bleibt als weitere Möglichkeit den Schlupf zu beseitigen, den Förderstrom der Axialkolbenpumpe 4 entweder über eine Drehzahlsenkung des Dieselmotors 2 oder über eine Verringerung ihres Schwenkwinkels zu verringern.

Nachdem die Schlupfsituation an der Vorderachse 6 beseitigt ist, können über die Steuereinrichtung 24 die Schwenkwinkel der Axialkolbenmotoren 18 der Räder 16 der Hinterachseinheit 14, und damit deren Schluckvolumina, in einer geeigneten Rampenfunktion auf kleine Werte zurückgestellt werden. So kann mit Hilfe der Steuereinrichtung 24 eine optimale Traktionsverteilung zwischen den Rädern 8 der Vorderachseinheit 6 und den Rädern 16 der Hinterachseinheit 14 erreicht werden. Oder falls die Verhältnisse günstig sind, kann komplett und automatisch in den Zweiradantrieb zurückgeschaltet werden.

Der erfindungsgemäße hydrostatische Fahrantrieb 1 und das erfindungsgemäße Verfahren ist nicht auf das gezeigte Ausführungsbeispiel des Fahrantriebes eingeschränkt. So gilt für jede Achseinheit des Fahrantriebes, dass die Räder entweder einzeln über einen Rad-Hydromotor oder gemeinsam über einen Achs-Hydromotor angetrieben sein können. Die Hydromotoren können dabei als Konstant- oder als Verstellmotoren ausgebildet sein. Ebenso kann der Fahrantrieb mehr als zwei, beispielsweise drei, vier, fünf oder sechs Achseinheiten aufweisen. Ebenso kann der erfindungsgemäße Fahrantrieb zwei oder drei Räder oder ein Mehrfaches der Anzahl oben genannter Achseinheiten aufweisen. Ebenso kann der erfindungsgemäße Fahrantrieb bei Fahrzeugen eingesetzt werden, die nicht nach dem Prinzip der Radtraktion sondern nach dem Prinzip der Kettentraktion angetrieben sind, also einen Kettenantrieb haben.

Der erfindungsgemäße hydrostatische Fahrantrieb kann eine Drehrichtungsumkehr aufweisen.

Die Anzahl der verwendeten Hydropumpen im erfindungsgemäßen hydrostatischen Fahrantrieb kann größer als eins sein. So kann beispielsweise auch eine Tandempumpe zum Einsatz kommen. Wird im Zweiradbetrieb gefahren, kann der aus dem geringeren Schluckvolumen der Hydromotoren resultierende und verringerte Ölstrombedarf dazu genutzt werden, nur eine Pumpe anzusteuern und die zweite in Neutralstellung zu belassen. Das steigert den Wirkungsgrad des Fahrantriebes.

Offenbart ist ein hydrostatischer Fahrantrieb mit einer Antischlupfregelung mit mindestens einer Hydropumpe, über die mehrere Hydromotoren mehrerer Achsen mit Druckmittel versorgbar sind. In Abhängigkeit eines erfassten Schlupfes ist über eine Steuereinrichtung automatisch zwischen einem Zweirad- oder Mehrradantrieb umschaltbar und sind die Antriebsmomente regelbar. Somit ist bei dem erfindungsmäßen Fahrantrieb eine optimale Verteilung der Antriebmomente und der Traktion zwischen den Achsen oder Rädern des Fahrantriebes einstellbar.

Offenbart ist weiterhin ein Verfahren zur Antischlupfregelung eines hydrostatischen Fahrantriebes, das auf eine Schlupfsituation im ersten Schritt mit einer Zuschaltung eines Hydromotors von bis dahin nicht oder mit nur geringem Antriebsmoment angetriebenen Achsen oder Rädern oder mit einer Erhöhung der Antriebsmomente von bis dahin nichtschlupfenden Rädern reagiert, wobei die Zuschaltung oder die Erhöhung über eine Steigerung eines Schluckvolumens des Hydromotors der Achsen oder Räder erfolgt.

## Patentansprüche

1. Hydrostatischer Fahrantrieb mit zumindest einer Hydropumpe (4), über die zumindest zwei Hydromotoren (12, 18) mit Druckmittel versorgbar sind, wobei über die Hydromotoren (12, 18) jeweils eine Achseinheit (6, 14) oder ein Rad (8, 16) der Achseinheit (6, 14) antreibbar ist, **gekennzeichnet durch** eine Einrichtung zur Erfassung eines Schlupfes eines Rades (8) einer ersten Achseinheit (6) und eine Steuereinrichtung (24), über die der zumindest eine Hydromotor (18) einer anderen Achseinheit (14) oder eines Rades (16) der anderen Achseinheit (14) in Abhängigkeit des Schlupfes zuschaltbar ist.

2. Hydrostatischer Fahrantrieb nach Anspruch 1, wobei der zumindest eine Hydromotor (18) der anderen Achseinheit (14) oder des Rades (16) der anderen Achseinheit (14) bei Erfassung des Schlupfes über die Steuereinrichtung (24) in Richtung eines größeren Schluckvolumens verstellbar ist.

3. Hydrostatischer Fahrantrieb nach Anspruch 1, wobei der zumindest eine Hydromotor (18) der anderen Achseinheit (14) oder des Rades (16) der anderen Achseinheit (14) in einer Fahrsituation ohne Schlupf über die Steuereinrichtung (24) abgeschaltet ist.

4. Hydrostatischer Fahrantrieb nach Anspruch 2, wobei der zumindest eine Hydromotor (18) der anderen Achseinheit (14) oder des Rades (16) der anderen Achseinheit (14) in einer Fahrsituation ohne Schlupf über die Steuereinrichtung (24) in Richtung eines kleineren Schluckvolumens verstellbar ist.

5. Hydrostatischer Fahrantrieb nach Anspruch 1, wobei die Einrichtung zur Erfassung des Schlupfes zumindest einen Drucksensor aufweist, der in oder an einer Hochdruckleitung (20) angeordnet ist, oder wobei die Einrichtung zur Erfassung des Schlupfes zumindest einen Drehzahlmesser (32) zur Bestimmung einer Drehzahl der Hydromotoren (12, 18) oder der Achseinheiten (6, 14) oder der Räder (8, 16) aufweist.

6. Hydrostatischer Fahrantrieb nach Anspruch 1, wobei der zumindest eine Hydromotor (12) der ersten Achseinheit (6) oder des Rades (8) der ersten Achseinheit (6) über die Steuereinrichtung (24) verstellbar ist.

7. Hydrostatischer Fahrantrieb nach Anspruch 1, wobei die Hydropumpe (4) über die Steuereinrichtung (24) verstellbar ist.

8. Hydrostatischer Fahrantrieb nach Anspruch 1, wobei eine über die Steuereinrichtung (24) automatisch gesteuerte Zuschaltung oder Verstellung des zumindest einen Hydromotors (18) der anderen Achseinheit (14) oder des Rades (16) der anderen Achseinheit (14) über eine Bedieneinheit (26) aktivierbar oder deaktivierbar ist.

9. Verfahren zur Antischlupfregelung eines hydrostatischen Fahrantriebes (1), mit zumindest einer Hydropumpe (4), über die zumindest zwei parallel geschaltete Hydromotoren (12, 18) mit einem Druckmittel versorgbar sind, wobei eine erste Achseinheit (6) oder ein Rad (8) der ersten Achseinheit (6) über zumindest einen Hydromotor (12) der ersten Achseinheit (6) angetrieben ist, und wobei eine andere Achseinheit (14) oder ein Rad (16) der anderen Achseinheit (14) über zumindest einen Hydromotor (18) der anderen Achseinheit (14) antreibbar ist, und wobei eine Erfassung eines Schlupfes eines Rades (8) der ersten Achseinheit (6) erfolgt, **gekennzeichnet durch** den Schritt Zuschaltung des zumindest einen Hydromotors (18) der anderen Achseeinheit (14) oder des Rades (16) der anderen Achseinheit (14) über eine Steuereinrichtung (24) in Abhängigkeit des Schlupfes.

10. Verfahren zur Antischlupfregelung des hydrostatischen Fahrantriebes (1) nach Anspruch 9, wobei die Erfassung des Schlupfes über eine Bestimmung eines Druckes in einer Hochdruckleitung (20) mittels eines Drucksensors und / oder über eine Bestimmung einer Drehzahl der Hydromotoren (12, 18) oder der Räder (8, 16) mittels eines Drehzahlmessers (32) erfolgt und wobei erfasste Werte an die Steuereinrichtung (24) übermittelt werden.

11. Verfahren zur Antischlupfregelung des hydrostatischen Fahrantriebes (1) nach Anspruch 9, wobei zusätzlich zum Schritt Zuschaltung über die Steuereinrichtung (24) ein Schritt Erhöhung eines Schluckvolumens des zumindest einen Hydromotors (18) der anderen Achseinheit (14) oder des Rades (16) der anderen Achseinheit (14) in Abhängigkeit des Schlupfes erfolgt.

12. Verfahren zur Antischlupfregelung des hydrostatischen Fahrantriebes (1) nach einem der Ansprüche 9 oder 11, wobei ergänzend zum Schritt Zuschaltung oder zum Schritt Erhöhung über die Steuereinrichtung (24) ein Schritt Verringerung des Schluckvolumens des zumindest einen Hydromotors (12) der ersten Achseeinheit (6) oder des Rades (8) der ersten Achseinheit (6) in Abhängigkeit des Schlupfes erfolgt.

13. Verfahren zur Antischlupfregelung eines hydrostatischen Fahrantriebes (1) nach Anspruch 12, wobei ergänzend zum Schritt Verringerung des Schluckvolumens des zumindest einen Hydromotors (12) der ersten Achseinheit (6) oder des Rades (8) der ersten Achseinheit (6) zusätzlich über die Steuereinrichtung (24) ein Schritt Verringerung des Fördervolumens der zumindest einen Hydropumpe (4) erfolgt.

14. Verfahren zur Antischlupfregelung eines hydrostatischen Fahrantriebes (1) nach einem der Ansprüche 9 bis 13, wobei nach einer Behebung des Schlupfes über die Steuereinrichtung (24), ein Schritt Abschaltung des zumindest einen anderen Hydromotors (18) oder ein Schritt Verringerung des Schluckvolumens des zumindest einen anderen Hydromotors (18) erfolgt.

## Claims

1. Hydrostatic drive system comprising at least one hydraulic pump (4), via which at least two hydraulic motors (12, 18) can be supplied with pressure medium, wherein each axle unit (6, 14) or a respective wheel (8, 16) of the axle unit (6, 14) can be driven via a respective one of the hydraulic motors (12, 18), **characterized by** a device for detecting slip of a wheel (8) of a first axle unit (6) and a control device (24), via which the at least one hydraulic motor (18) of another axle unit (14) or of a wheel (16) of another axle unit (14) can be switched over in accordance with the slip.

2. Hydrostatic drive system according to Claim 1, wherein the at least one hydraulic motor (18) of the other axle unit (14) or of the wheel (16) of the other axle unit (14) can be adjusted via the control device (24) toward greater capacity when slip is detected.

3. Hydrostatic drive system according to Claim 1, wherein the at least one hydraulic motor (18) of the other axle unit (14) or of the wheel (16) of the other axle unit (14) is deactivated via the control device (24) in a driving situation without slip.

4. Hydrostatic drive system according to Claim 2, wherein the at least one hydraulic motor (18) of the other axle unit (14) or of the wheel (16) of the other axle unit (14) can be adjusted via the control device (24) toward lower capacity in a driving situation without slip.

5. Hydrostatic drive system according to Claim 1, wherein the device for detecting slip has at least one pressure sensor, which is arranged in, or on, a high-pressure line (20), or wherein the device for detecting slip has at least one rotational-speed sensor (32) for determining a rotational speed of the hydraulic motors (12, 18) or of the axle units (6, 14) or of the wheels (8, 16).

6. Hydrostatic drive system according to Claim 1, wherein the at least one hydraulic motor (12) of the first axle unit (6) or of the wheel (8) of the first axle unit (6) can be adjusted via the control device (24).

7. Hydrostatic drive system according to Claim 1, wherein the hydraulic pump (4) can be adjusted via the control device (24).

8. Hydrostatic drive system according to Claim 1, wherein an activation or adjustment, controlled automatically via the control device (24), of the at least one hydraulic motor (18) of the other axle unit (14) or of the wheel (16) of the other axle unit (14) can be activated or deactivated via an operating unit (26).

9. Method for the anti-slip regulation of a hydrostatic drive system (1) comprising at least one hydraulic pump (4), via which at least two hydraulic motors (12, 18) connected in parallel can be supplied with a pressure medium, wherein a first axle unit (6) or a wheel (8) of the first axle unit (6) is driven via at least one hydraulic motor (12) of the first axle unit (6), and wherein another axle unit (14) or a wheel (16) of the other axle unit (14) can be driven via at least one hydraulic motor (18) of the other axle unit (14), and wherein slip of a wheel (8) of the first axle unit (6) is detected, **characterized by** the step of activating the at least one hydraulic motor (18) of the other axle unit (14) or of the wheel (16) of the other axle unit (14) via a control device (24) in accordance with the slip.

10. Method for the anti-slip regulation of the hydrostatic drive system (1) according to Claim 9, wherein slip is detected by determining a pressure in a high-pressure line (20) by means of a pressure sensor and/or by determining a rotational speed of the hydraulic motors (12, 18) or of the wheels (8, 16) by means of a rotational-speed sensor (32), and wherein detected values are forwarded to the control device (24).

11. Method for the anti-slip regulation of the hydrostatic drive system (1) according to Claim 9, wherein, in addition to the step of activation, a step of increasing a capacity of the at least one hydraulic motor (18) of the other axle unit (14) or of the wheel (16) of the other axle unit (14) is carried out via the control device (24) in accordance with the slip.

12. Method for the anti-slip regulation of the hydrostatic drive system (1) according to one of Claims 9 and 11, wherein, in addition to the step of activation or the step of increasing, a step of reducing the capacity of the at least one hydraulic motor (12) of the first axle unit (6) or of the wheel (8) of the first axle unit (6) is carried out via the control device (24) in accordance with the slip.

13. Method for the anti-slip regulation of a hydrostatic drive system (1) according to Claim 12, wherein in addition to the step of reducing the capacity of the at least one hydraulic motor (12) of the first axle unit (6) or of the wheel (8) of the first axle unit (6), a step of reducing the delivery rate of the at least one hydraulic pump (4) is additionally carried out via the control device (24).

14. Method for the anti-slip regulation of a hydrostatic drive system (1) according to one of Claims 9 to 13, wherein, once the slip has been remedied via the control device (24), a step of deactivating the at least one other hydraulic motor (18) or a step of reducing the capacity of the at least one other hydraulic motor (18) is carried out.

## Revendications

1. Organe de translation hydrostatique doté d'au moins une pompe hydraulique (4) via laquelle au moins deux moteurs hydrauliques (12, 18) peuvent être alimentés en moyen de pression, une unité d'essieu (6, 14) ou une roue (8, 16) de l'unité d'essieu (6, 14) étant respectivement entraînée via les moteurs hydrauliques (12, 18), **caractérisé par** la présence d'un dispositif de détection de patinage d'une roue (8) d'une première unité d'essieu (6) et d'un dispositif de commande (24) via lequel l'au moins un moteur hydraulique (18) d'une autre unité d'essieu (14) ou d'une roue (16) de l'autre unité d'essieu (14) peut être commuté en cas de patinage.

2. Organe de translation hydrostatique selon la revendication 1, l'au moins un moteur hydraulique (18) de l'autre unité d'essieu (14) ou de la roue (16) de l'autre unité d'essieu (14) pouvant être déplacé en direction d'un plus grand volume absorbé via le dispositif de commande (24) en cas de détection d'un patinage.

3. Organe de translation hydrostatique selon la revendication 1, l'au moins un moteur hydraulique (18) de l'autre unité d'essieu (14) ou de la roue (16) de l'autre unité d'essieu (14) étant déconnecté via le dispositif de commande (24) dans une situation de conduite sans patinage.

4. Organe de translation hydrostatique selon la revendication 2, l'au moins un moteur hydraulique (18) de l'autre unité d'essieu (14) ou de la roue (16) de l'autre unité d'essieu (14) pouvant être réglé en direction d'un plus petit volume absorbé via le dispositif de commande (24) dans une situation de conduite sans patinage.

5. Organe de translation hydrostatique selon la revendication 1, le dispositif de détection de patinage comportant au moins un capteur de pression disposé dans une conduite haute pression (20) ou à proximité de celle-ci ou le dispositif de détection de patinage comportant au moins un système de mesure de vitesse de rotation (32) permettant de déterminer la vitesse de rotation des moteurs hydrauliques (12, 18) ou des unités d'essieu (6, 14) ou des roues (8, 16).

6. Organe de translation hydrostatique selon la revendication 1, l'au moins un moteur hydraulique (12) de la première unité d'essieu (6) ou de la roue (8) de la première unité d'essieu (6) pouvant être réglé via le dispositif de commande (24).

7. Organe de translation hydrostatique selon la revendication 1, la pompe hydraulique (4) pouvant être réglée via le dispositif de commande (24).

8. Organe de translation hydrostatique selon la revendication 1, une connexion ou un déplacement, automatiquement commandé via le dispositif de commande (24), de l'au moins un moteur hydraulique (18) de l'autre unité d'essieu (14) ou de la roue (16) de l'autre unité d'essieu (14) pouvant être activé ou désactivé via une unité de commande (26).

9. Procédé de régulation antipatinage d'un organe de translation hydrostatique (1), doté d'au moins une pompe hydraulique (4) via laquelle au moins deux moteurs hydrauliques (12, 18) connectés en parallèle peuvent être alimentés en moyen de pression, une première unité d'essieu (6) ou une roue (8) de la première unité d'essieu (6) étant entraînée via au moins un moteur hydraulique (12) de la première unité d'essieu (6) et une autre unité d'essieu (14) ou une roue (16) de l'autre unité d'essieu (14) étant entraînée via au moins un moteur hydraulique (18) de l'autre unité d'essieu (14) et une détection de patinage d'une roue (8) de la première unité d'essieu (6) se produisant, **caractérisé par** l'étape de connexion de l'au moins un moteur hydraulique (18) de l'autre unité d'essieu (14) ou de la roue (16) de l'autre unité d'essieu (14) via un dispositif de commande (24) en cas de patinage.

10. Procédé de régulation antipatinage de l'organe de translation hydrostatique (1) selon la revendication 9, la détection d'un patinage via une détection de la pression régnant dans une conduite haute pression (20) à l'aide d'un capteur de pression et/ou via une détection d'une vitesse de rotation des moteurs hydrauliques (12, 18) ou des roues (8, 16) se produisant à l'aide d'un système de mesure de vitesse de rotation (32) et les valeurs détectées étant transmises au dispositif de commande (24).

11. Procédé de régulation antipatinage de l'organe de translation hydrostatique (1) selon la revendication 9, dans lequel en sus de l'étape de connexion via le dispositif de commande (24), une étape d'augmentation d'un volume absorbé de l'au moins un moteur hydraulique (18) de l'autre unité d'essieu (14) ou de la roue (16) de l'autre unité d'essieu (14) se produit en cas de patinage.

12. Procédé de régulation antipatinage de l'organe de translation hydrostatique (1) selon l'une quelconque des revendications 9 ou 11, dans lequel en complément de l'étape de connexion ou de l'étape d'augmentation via le dispositif de commande (24), une étape de réduction du volume absorbé de l'au moins un moteur hydraulique (12) de la première unité d'essieu (6) ou de la roue (8) de la première unité d'essieu (6) se produit en cas de patinage.

13. Procédé de régulation antipatinage d'un organe de translation hydrostatique (1) selon la revendication 12, dans lequel en complément de l'étape de réduction du volume absorbé de l'au moins un moteur hydraulique (12) de la première unité d'essieu (6) ou de la roue (8) de la première unité d'essieu (6), une étape de réduction du volume d'extraction de l'au moins une pompe hydraulique (4) se produit en sus via le dispositif de commande (24).

14. Procédé de régulation antipatinage d'un organe de translation hydrostatique (1) selon l'une quelconque des revendications 9 à 13, dans lequel une étape de déconnexion de l'au moins un autre moteur hydraulique (18) ou une étape de réduction du volume absorbé de l'au moins un autre moteur hydraulique (18) se produit après une réparation du patinage via le dispositif de commande (24).
